Europäisches Patentamt

European Patent Office

Office européen des brevets

(11) Publication number: **0 212 008**
**B1**

## (12) EUROPEAN PATENT SPECIFICATION

(45) Date of publication of patent specification: **26.07.89**

(21) Application number: **85201731.8**

(22) Date of filing: **22.10.85**

(51) Int. Cl.⁴: **B 62 D 33/06**

(54) A hydraulic feed assembly for a double-acting piston-cylinder device.

(30) Priority: **13.08.85 NL 8502244**

(43) Date of publication of application:
**04.03.87 Bulletin 87/10**

(45) Publication of the grant of the patent:
**26.07.89 Bulletin 89/30**

(84) Designated Contracting States:
**DE FR GB IT NL SE**

(56) References cited:
**GB-A-2 121 114**
**US-A-4 440 252**

(73) Proprietor: **Applied Power Inc.**
**250 Executive Drive**
**Brookfield Wisconsin 53005 (US)**

(72) Inventor: **Sonneborn, Lambertus Johannes**
**Waterhamskamp 15**
**NL-7576 EM Oldenzaal (NL)**
Inventor: **Oudelaar, Tone**
**Brederostraat 3**
**NL-7576 CA Oldenzaal (NL)**

(74) Representative: **Boelsma, Gerben Harm, Ir. et al**
**Octrooibureau Polak & Charlouis Laan Copes**
**van Cattenburch 80**
**NL-2585 GD Den Haag (NL)**

Courier Press, Leamington Spa, England.

## Description

The invention relates to a hydraulic feed assembly for a double-acting piston-cylinder device, comprising a housing provided with two connecting ports for the piston-cylinder device and a reservoir combined therewith, said housing containing the pump chamber communicating with the reservoir through a suction valve, as well as the plunger body of a hydraulic pump and a hydraulic control valve movable between at least two positions, the control valve functioning as a selective connecting means between the ports at one hand and the pump chamber as well as the reservoir on the other hand.

A similar feed assembly is known and is also used for controlling the hydraulic tilting cylinder or cylinders of motor vehicles, provided with a tiltable cab. In such an application the feed assembly is generally provided at an easily accessible location. Therefore it would also be easy for an unauthorized person to actuate the hydraulic pump, which for example is in the embodiment of a manually operable pump and therewith to tilt the cab. Proposals have already been made as a safe-guard against actuation by unauthorized persons. So US—A—4 440 252 describes the use of a connecting conduit between the cylinder ends of the hydraulic tilting apparatus in which conduit a valve is inserted which is normally open and thereby prevents a tilting movement, which valve can only be closed in a special manner such as electromagnetically by means of a special key.

Apart from the fact that such a solution cannot be used in the case of a "regeneratively" switching control valve, this solution has the disadvantage of additional hydraulic components and conduits adjacent to the tilting apparatus.

The invention aims at safeguarding the hydraulic tilting system of a vehicle having a tiltable cab, in a simple and effective manner, against actuation by unauthorized persons and simultaneously at offering the possibility to block the tilting system in danger presenting situations such as with a gear box switched in gear and/or with the parking brake out of engagement.

The invention for that purpose provides a hydraulic feed assembly of the initially described type which is characterized in that an additional communication channel is present in the housing between the pump chamber and the reservoir, a valve being inserted in said channel which valve is normally open and is adapted for receiving a closing signal which is to be remotely produced.

Thereby the safeguarding function which is desired for the application in view, is integrated with the feed assembly according to the invention whereby said feed assembly is universally usable in vehicles having a tiltable cab and being of different origins.

The closing signal which is to be remotely produced is e.g. an electric signal, in which case the valve is an electro-valve which is incorporated in an electrical feed circuit which e.g. may be closed from the cab by acting on a button or by means of a contact key. Further contacts may be included in said feed circuit the condition of which (closed or open) depends on safety conditions being or not being met, such as the gear box being disengaged and/or the parking brake being applied. However, instead of an electric signal also a pneumatic signal may be considered.

The invention is hereunder further explained with reference to the drawing showing an embodiment, given as an example.

Fig. 1 shows the hydraulic diagram of the main components of the feed assembly according to the invention as well as of a hydraulic piston cylinder device controlled by said feed assembly;

Fig. 2 is a side view of the hydraulic feed assembly according to the invention;

Fig. 3 is a section along the line III—III in Fig. 2; and

Fig. 4 is a section along the line IV—IV in Fig. 3.

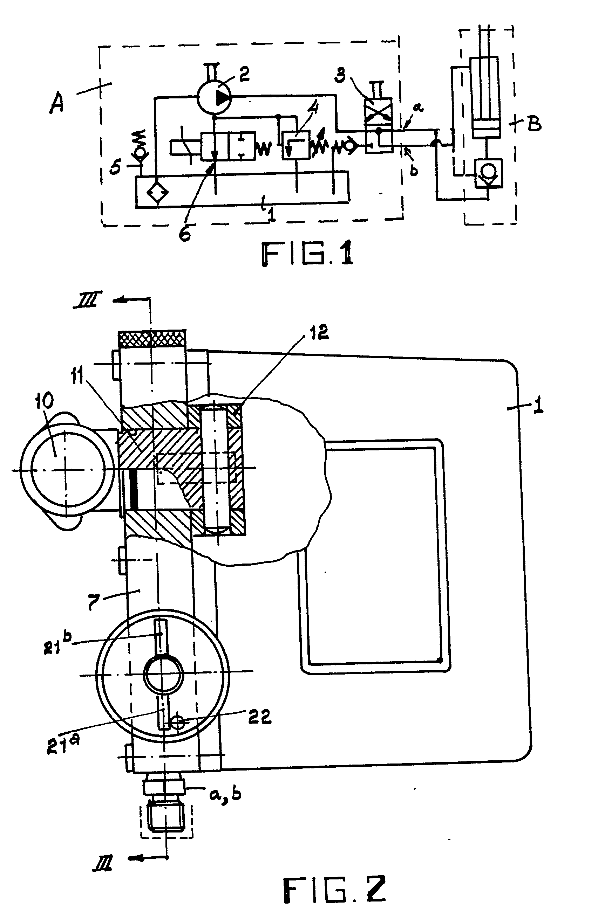

In the diagram of Fig. 1 a reservoir 1 is indicated for hydraulic liquid, a hydraulic pump 2, a hydraulic control valve 3, an overload valve 4 and a safety valve 5. The components 1—5 are integrated in a hydraulic feed assembly A of a known type. Said feed assembly is connected through its both connecting ports a and b with the cylinder ends of the hydraulic piston cylinder device indicated B, the lower cylinder end of which is articulated to the chassis of a motor vehicle in known but not further shown manner and the upper piston rod end of which is articulated to a cab of that vehicle which is tiltable around a horizontal transverse axis.

In the diagram of Fig. 1 the control valve 3 is in the tilting position and the valve has been constructed such that both cylinder ends are connected with the pressure side of the pump 2. In this case the circuit is called a regenerative circuit.

Now according to the invention a component 6 has been added to the feed assembly A comprising a valve which normally (i.e. in absence of an exterior signal) is open and thereby connects the pressure side of the pump 2 to the reservoir 1. Therefore in this condition of the valve 6, actuating the pump 2 (e.g. by acting on a lever in case of a manually operated pump) has no effect, since the hydraulic liquid sucked from the reservoir is pumped through the open valve 6 back to the reservoir so that no pressure is generated at the pressure side of the pump. Thereby an effective safeguard is obtained against tilting the cab from the drive position by unauthorized persons.

In order to permit tilting the cab first the valve 6 will have to be closed (against spring bias). Thereto the valve 6 e.g. is an electro-valve and inserted in an electric circuit which may be closed by acting upon a button which is not or difficultly accessible for unauthorized persons, or by means of a special key. A plurality of interrupting points may be used in this circuit, namely materialized by pairs of electric contacts which remain open and thereby prevent starting tilting movements as long as, with the engine switched off, predetermined, danger producing situations remain such as being engaged in gear of the gear box and/or the parking brake not being applied. Closing the valve 6 and thereby the tilting operation will only be permitted if all safety conditions, which are to be met, are fulfilled.

In the practical embodiment according to Fig. 2—4 the pump 2 and the control valve 3 are in known manner combined into a common flat housing 7 which simultaneously constitutes the closing cover of the reservoir 1. The pump 2 is here constituted by a plunger 8 which is reciprocatable in a cylindrical pump chamber 9 by means of an arm 12 which is reciprocatable by means of a hand lever 10 and is secured to a shaft 11 which is journalled in the housing 7. The pump chamber 9 is closed at its upper end opening in a side wall of the housing 7 by a closure plug or venting plug respectively 13 and communicates with its lower end with a narrower bore 14 in which a seat 15 for a ball shaped suction valve 16 has been provided (see Fig. 3). The portion 17 of the bore 14 situated below the suction valve 15 communicates with the liquid chamber within the reservoir 1 through a radial bore 18.

The bore 14 is intersected perpendicularly by a bore 19 in which the cylindrical valve body 20 of the hydraulic control valve 3 is journalled. The cylindrical valve body 20 carries at its end projecting beyond the side wall of the housing 7 an actuating knob 21 by means of which the valve body may be rotated between two operative positions. In the operative position shown in the drawing (see Fig. 2) the radially extending part 21a of the actuating knob 21 is in engagement with the left hand side of a fixed abutment pin 22. By rotating the knob 20 from the position according to Fig. 2 to the right the valve body arrives in its second operative position in which the radially extending part 21b of the actuating knob is in engagement with the right hand side of the abutment pin 22.

The cylindrical valve body 20 has a cavity 23 which communicates through radial bores 24 with the bore 14 and the pump chamber 9. The cavity 23 receives a ball shaped spring-biased pressure valve 25. The valve body 20 furthermore is provided with a cylindrical circumferential recess 26 which together with the wall of the bore 19 defines an annular space 27 which communicates with the reservoir 1 through a channel (not shown) and serves for receiving and discharging towards the reservoir of hydraulic liquid returning from the hydraulic piston-cylinder device.

In the operative position according to Fig. 3 the connecting port 6 communicates through a connecting port 28 provided in the wall of the valve body 20 with the cavity 23 and through the pressure valve 25 with the pump chamber 9, the connecting port a communicating with the annular discharge space 27. In this operative position the piston of the piston-cylinder device may be moved downwardly by actuating the pump 2 (see Fig. 1) which corresponds with tilting the cab back to the drive position from the tilted position.

With a control valve constructed for a regenerative circuit also the connecting port a becomes in the second operative position (corresponding with tilting the cab from the drive position) communicated with the cavity 23 through a radial connecting port (not shown).

The second operative position corresponds with that according to Fig. 1.

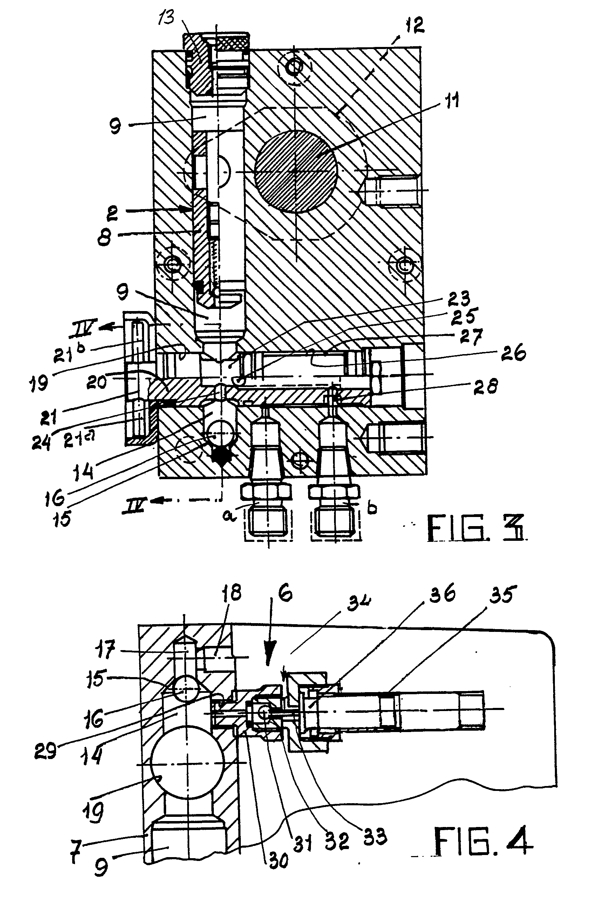

Up till now the practical embodiment according to Fig. 2—4 may be considered as being known. The valve according to the invention, indicated 6 in the diagram of Fig. 1, communicates in the practical embodiment according to Fig. 2—4 with a radial connecting bore 29 (see Fig. 4) between the reservoir 1 and a portion of the bore 14 situated between the suction valve seat 15 and the bore 19. The valve 6 comprises a housing 30, screwed into the connecting bore 29 and having a ball shaped valve body 31 and a valve seat 32.

33 indicates a pin-shaped element which is received in a spacious bore extending to the right (in Fig. 4) from the seat 32 and which communicates through one or more radial bores at 34 with the reservoir chamber. The pin-shaped element 33 is adapted for normally keeping the valve ball 31 (i.e. as long as no tilting movements are required) lifted from its seat 32. The pump chamber 10 communicates through this opened valve 6 and the bores at 34 with the reservoir 1 so that, when the pump is actuated, no pressure can be generated. The pin-shaped element 33 is thereto pushed by a spring loaded biasing means 36 (not shown) received in a housing 35. Furthermore around the housing 35 there is room for the provision of an actuating means such as an electromagnet spool, by means of which by supplying an electric potential the pushing member 36 may be pulled to the right so that the valve ball 31 may close. It will be clear that the housing 35 thereto has to be connected through a connecting piece (not shown in detail), liquid-tight, through the wall of the reservoir 1 with an exterior connecting point.

## Claim

A hydraulic feed assembly (A) for a double-acting piston-cylinder device (B), comprising a housing (7) provided with two connecting ports (a, b) for the piston-cylinder device (B) and a reservoir (1) combined therewith, said housing (7) containing the pump chamber (9) communicating through a suction valve (16) with the reservoir (1), as well as the plunger body (8) of a hydraulic pump (2) and a hydraulic control valve (3) movable between at least two positions, the control valve (3) functioning as a selective communication means between the ports (a, b) at one end and the pump chamber (9) as well as the reservoir (1) on the other hand, characterized in that an additional bypass channel (radial connecting bore 29) is provided in the housing (7) between the pump chamber (9) and reservoir (1), in which channel a valve is provided which is normally open and adapted for receiving a remotely produced closing signal to allow hydraulic pressure being transmitted via the connecting ports (a, b) to the piston-cylinder device (B).

**Patentanspruch**

Eine hydraulische Speise-Einheit (A) für eine doppeltwirkende Kolben-Cylindervorrichtung (B), bestehend aus einem Gehäuse (7) versehen mit zwei Verbindungsöffnungen (a, b) für die Kolbenzylindervorrichtung (B) und einem damit vereinigten Behälter (1) in welchem Gehäuse (7) sich die Pumpenkammer (9) befindet, welche über ein Saugventil (16) mit dem Behälter (1) verbunden ist, sowie mit dem Plungerkörper (8) einer hydraulischen Pumpe (2) und mit einem hydraulischen Regelventil (3) welches zwischen wenigstens zwei Lagen bewegbar ist, welches Regelventil (3) als ein wahlbares Verbindungsmittel zwischen den Öffnungen (a, b) einerseits und der Pumpenkammer (9) sowie dem Behälter (1) anderseits wirksam ist, dadurch gekennzeichnet, dass ein zusätzlicher Umlaufkanal (radiale Verbindungsbohrung 29) im Gehäuse (7) zwischen der Pumpenkammer (9) und dem Behälter (1) vorgesehen ist, in welchem Kanal ein Ventil vorgesehen ist, welches normal geöffnet und geeignet ist zur Aufnahme eines auf Abstand verursachtes Schlieszsignals damit hydraulischer Druck über die Verbindungsöffnungen (a, b) in die Kolbenzylindervorrichtung (B) übergeleitet werden kann.

**Revendication**

Une unité hydraulique d'alimentation (A) d'un dispositif piston-cylindre à double effet (B) comprenant un corps (7) pourvu de deux ouvertures (a, b) de connexion pour le dispositif (B) piston-cylindre et un réservoir (1) combiné avec ledit dispositif, le corps (7) comprenant la chambre de pompe (9) communiquant à travers une soupape d'admission (16) avec le réservoir (1), ainsi que le corps plongeur (8) d'une pompe hydraulique (2) et une soupape de régulation hydraulique (3) mobile entre au moins deux positions, la soupape de régulation (3) fonctionnant comme moyen de communication sélectif entre les ouvertures (a, b) d'un côté et la chambre de pompe (9) ainsi que le réservoir (1) de l'autre côté, caractérisé en ce qu'un conduit additionnelle de détour (perçage radial de connexion (29)) est prévu dans le corps (7) entre la chambre de pompe (9) et le réservoir (1), dans lequel conduit une soupape a été prévue, étant normalement ouverte et arrangée à recevoir un signal de fermeture engendré à distance, permettant de transmettre une pression hydraulique à travers les ouvertures de connexion (a, b) au dispositif piston-cylindre (B).

**FIG.1**

**FIG.2**

FIG. 3

FIG. 4